# FASCICULE DE BREVET EUROPEEN

(11) **EP 2 845 771 B1**
(45) Date de publication et mention de la délivrance du brevet: **10.10.2018**
(21) Numéro de dépôt: 14184030.6
(22) Date de dépôt: 09.09.2014
(51) Int. Cl.: B60R 13/02

(54) **Ensemble structurel de véhicule automobile**
Struktureinheit eines Kraftfahrzeugs
Structural assembly of a motor vehicle

(30) Priorité: 09.09.2013 FR 1358632
(43) Date de publication de la demande: 11.03.2015
(73) Titulaire: VALEO VISION, 93012 Bobigny Cedex (FR)
(72) Inventeur: Boiroux, Nicolas, 95000 Pontoise (FR); Letoumelin, Rémi, 77700 Chessy (FR); Rjeb, Slim, 92000 Nanterre (FR)

(56) Documents cités:
- EP-A1- 2 208 645
- DE-A1- 10 359 123
- DE-A1-102006 054 264
- DE-A1-102013 200 192

## Description

Le domaine technique de l'invention est celui des éléments piézoélectriques. La publication EP 2 208 645 A1 divulgue un ensemble structurel de véhicule automobile d'après le préambule de la revendication 1. Que l'élément piézoélectrique fonctionne comme un actionneur ou comme un récepteur, le principe de fonctionnement est le même. L'élément piézoélectrique transforme un courant électrique en une pulsation mécanique (lorsqu'il fonctionne comme actionneur) ou inversement il transforme une déformation mécanique en un signal électrique (lorsqu'il fonctionne comme récepteur)

La présente invention a pour objet de proposer une application spécifique de ce type d'élément piézoélectrique dans un véhicule automobile.

A cet effet, l'invention propose un ensemble structurel de véhicule automobile, caractérisé en ce qu'une plaque est montée dans un élément de structure de manière à pouvoir se déformer sous l'effet d'une sollicitation mécanique, et en ce que cette plaque porte par ailleurs au moins un élément piézoélectrique piloté par un microprocesseur. L'élément piézoélectrique est apte à recevoir des instructions de commande de ce microprocesseur pour déformer par vibration la plaque.

On comprend que le terme « plaque » est ici utilisé pour définir un élément sensiblement bidimensionnel, dont l'épaisseur est faible au regard de sa longueur et de sa largeur.

La déformation par vibration de la plaque est effectuée selon une plage de fréquence de vibration qui permet de produire un effet sonore, en générant un déplacement de l'air autour de la plaque. La plage de fréquence de vibration est directement fonction de la matière de la plaque. A titre d'exemple, si la plaque est réalisée en P.M.M.A, la plage de fréquence correspondante s'étend de 200Hz à 20kHz. On peut envisager une séquence déterminée de déformations par vibration de la plaque à haute fréquence pour que la succession d'effets sonores forme une musique. Il convient de noter que ce n'est pas ici le mouvement de l'élément piézoélectrique qui produit directement le son en troublant l'air à proximité, mais c'est bien le mouvement de la plaque sur laquelle repose l'élément piézoélectrique qui produit cette perturbation et donc le son. Selon l'invention, on pourrait utiliser la présence d'un élément piézoélectrique dans un élément de structure du véhicule pour produire de la musique en se passant des haut-parleurs classiques.

On peut également envisager de produire par cette déformation un retour sensoriel pour un occupant du véhicule qui aurait touché au préalable le panneau, que ce soit par la création d'un son simple, conformément à ce qui vient d'être décrit, ou par une déformation plus forte de la plaque pour donner l'impression d'un retour de force.

Dans ce cas, le microprocesseur est en outre adapté à recevoir des informations quantitatives et/ou qualitatives sur la déformation provoquée par la sollicitation mécanique de la plaque par l'intermédiaire de moyens de détection de cette déformation, notamment au moins trois moyens de détection, rapportés sur cette plaque. Le microprocesseur est agencé pour piloter la vibration de l'élément piézoélectrique en fonction de ces informations. Le microprocesseur génère une instruction de commande tenant compte des informations relatives à la déformation initiale de la plaque, c'est-à-dire selon l'endroit que l'utilisateur a touché, et selon la force utilisée.

Selon un premier mode de réalisation de l'invention, les moyens de détection sont formés par des capteurs distincts de l'élément piézoélectrique. Différentes technologies de capteurs peuvent être utilisées, parmi lesquelles des capteurs capacitifs, sensitifs ou encore résistifs.

Selon un mode de réalisation différent de l'invention, les moyens de détection sont formés par l'élément piézoélectrique lui-même. De la sorte, ce dernier fonctionne alternativement comme un actionneur piézoélectrique apte à déformer par vibration la plaque selon une commande du microprocesseur et comme un récepteur adapté à détecter la déformation provoquée par la sollicitation mécanique de cette plaque. Ainsi, on se passe de moyens capteurs additionnels et l'on peut diminuer le nombre de composants.

L'ensemble structurel comporte un ensemble optique formé d'au moins une source lumineuse et un guide de lumière. Par guide de lumière, on entend un élément optique comportant au moins une face d'entrée agencée pour que la lumière émise par la source lumineuse et l'atteignant entre dans le guide, et au moins une face de sortie agencée pour que la lumière se propageant dans le guide et atteignant cette face sorte du guide, la lumière se propageant dans le guide par réflexion interne totale.

Avantageusement, la plaque forme une interface tactile de commande de l'allumage de l'ensemble optique.

L'ensemble optique peut être disposé contre la plaque. Le cas échéant, la plaque peut être en partie, voire totalement, formée par un matériau transparent ou translucide. Avantageusement, la ou les faces de sortie du guide sont disposées contre la ou les parties transparentes ou translucides de la plaque.

Selon une variante de l'invention, la plaque, formée par un matériau transparent ou translucide, peut former elle-même le guide de lumière. Dans ce cas, la plaque forme une nappe de guidage.

Le guide de lumière présente à sa périphérie des ailettes de fixation tandis que l'interface tactile est, notamment sur sa majeure partie, sensiblement plane, par exemple en présentant un plan de symétrie longitudinal et vertical sensiblement parallèle à celui du guide de lumière lorsque ce dernier est rapporté sur l'interface tactile. La plaque présente à au moins l'une de ses extrémités transversales un bord relevé dont l'extrémité libre est déportée de la plaque plane de l'interface et adaptée à loger les moyens capteurs pour la détection de la vibration de la plaque.

Selon une caractéristique de l'invention, l'ensemble structurel est agencé en dispositif d'éclairage de l'habitacle du véhicule automobile.

L'extrémité libre de la plaque prend la forme d'une gouttière comportant deux montants verticaux et une paroi de fond, qui s'étend sensiblement parallèlement au plan de la plaque de l'interface tactile. Le montant vertical interne, c'est-à-dire le plus proche du centre de l'interface, sert de support à la partie d'extrémité de l'ailette du guide qui repose sur l'interface tactile uniquement à ce niveau, sans qu'il y ait de contact par ailleurs entre la face de sortie du guide et l'interface. Chaque moyen capteur comporte deux capteurs qui sont disposés de part et d'autre de la paroi de fond de la gouttière, et qui sont portés par une armature entourant partiellement ladite gouttière.

L'invention concerne encore un véhicule automobile dans lequel la plaque affleure avec les bords délimitant une ouverture réalisée dans l'élément de structure pour recevoir cette plaque et l'ensemble optique. Dans une application préférée de l'invention, l'élément de structure est un pavillon de toit. Ainsi, on se réserve la possibilité de produire de la musique sur une plus grande surface, et on facilite l'accès à l'interface tactile pour l'utilisateur, qu'il soit passager avant ou arrière du véhicule.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
la figure 1 est une vue en perspective d'un élément de structure selon l'invention, ici un pavillon, comportant une interface tactile, un élément piézoélectrique et six moyens de détection de la vibration de l'interface, reliés chacun à un microprocesseur représentés ici schématiquement ; et
la figure 2 est une vue en coupe de l'élément de structure selon le repère II-II de la figure 1.

Dans la description qui va suivre, on adoptera à titre non limitatif une orientation longitudinale, verticale et transversale selon l'orientation traditionnellement utilisée dans l'automobile et indiquée par le trièdre L, V, T reporté sur les figures.

Tel qu'illustré, un véhicule automobile selon l'invention comporte un pavillon 2 dans lequel une ouverture 4 est découpée pour former un cadre à l'intérieur duquel est placée au moins une plaque 6 qui porte notamment au moins un élément piézoélectrique 8, piloté par un microprocesseur 10, notamment pour recevoir des instructions de commande.

L'élément piézoélectrique 8, par sa propriété physique connue en soi qui lie de façon proportionnelle la pression des cristaux le composant et la charge électrique en entrée ou en sortie de l'élément, peut fonctionner comme un actionneur. Dans ce cas, on applique sur l'élément une charge électrique donnée et on connaît la pression qui va s'appliquer sur les cristaux et la déformation de l'élément piézoélectrique qui en découle. En modulant la charge électrique appliquée sur en entrée, on modifie la déformation de l'élément piézoélectrique qui peut transmettre son mouvement à un composant mécanique solidaire. Ici, la déformation de l'élément piézoélectrique est transmise à la plaque 6 sur laquelle il est rapporté.

Ainsi, lorsqu'il fonctionne comme actionneur, l'élément piézoélectrique reçoit des instructions de commande en provenance du microprocesseur pour produire un mouvement mécanique et déformer par vibration la plaque. Ceci est particulièrement intéressant lorsque la plaque a une fonction d'interface tactile sur laquelle l'utilisateur du véhicule intervient par contact, tel que cela sera décrit ci-après, puisque la vibration de la plaque par l'intermédiaire de l'élément piézoélectrique permet de réaliser un retour sensoriel pour l'utilisateur, dès lors que l'instruction de commande de l'élément piézoélectrique reçu par le microprocesseur tient compte d'informations relatives à la déformation initiale de l'interface tactile faite par l'utilisateur. Selon la fréquence et l'amplitude à laquelle l'élément piézoélectrique fait vibrer la plaque, le retour sensoriel peut être perçu par l'utilisateur comme un son, ou comme un retour de force.

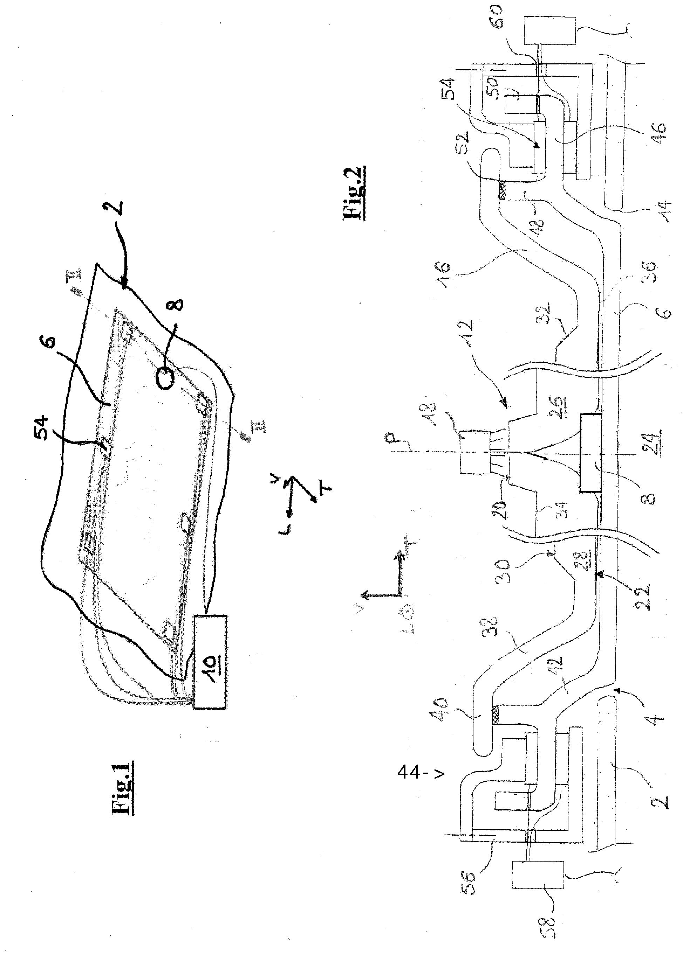

On comprendra qu'un unique élément piézoélectrique a été représenté sur la figure 1, mais qu'on pourrait envisager d'en disposer une pluralité sur la plaque, en les répartissant sur le pourtour de celle-ci. Le microprocesseur, relié à chacun d'entre eux, devra alors générer des instructions de commande pour la totalité des éléments piézoélectriques et selon la vibration que l'on souhaite obtenir de la plaque, ces instructions de commande pourront consister en un actionnement de tous les éléments piézoélectriques simultanément ou en décalé, à la même amplitude ou non.

Pour obtenir les informations relatives à la déformation initiale de l'interface tactile faite par l'utilisateur, l'interface tactile doit être équipée de moyens de détection de la déformation.

L'élément piézoélectrique, ou l'un des éléments piézoélectriques dans le cas d'une pluralité, peut jouer ce rôle. De la sorte, l'élément piézoélectrique est adapté à fonctionner aussi bien en tant que moyen récepteur qu'en tant qu'actionneur. Le transfert d'information peut se faire alors dans un sens ou dans l'autre entre l'élément piézoélectrique et le microprocesseur.

Dans le cas où l'élément piézoélectrique fonctionne comme un récepteur, on mesure sur l'élément la charge électrique résultant de la pression appliquée sur les cristaux le composant du fait de la déformation de l'élément piézoélectrique. D'après des tables de concordance, la mesure de la charge électrique est corrélée avec une déformation de l'élément et donc une déformation de la plaque.

Afin qu'il puisse fonctionner aussi bien en tant que moyen récepteur qu'en tant qu'actionneur, on cherche à donner aux éléments piézoélectriques une position centrale, au milieu de l'un des côtés de la plaque, pour faciliter la détection de la déformation de la plaque lorsque l'élément piézoélectrique fonctionne comme un détecteur, et pour faciliter la mise en vibration de la plaque lorsque l'élément piézoélectrique fonctionne comme un actionneur.

On peut également prévoir que l'élément piézoélectrique n'ait qu'un rôle d'actionneur, et dans ce cas, on prévoit des moyens de détection distincts. Cela est le cas dans un mode mise en oeuvre particulier de l'invention, tel qu'il est illustré notamment sur les figures 1 et 2. La plaque 6 est associée à un ensemble optique 12 logé également dans l'élément de structure, de sorte que la plaque vient recouvrir l'ensemble optique pour former une interface tactile. La plaque affleure avec les bords 14 délimitant l'ouverture 4 réalisée dans l'élément de structure pour recevoir l'ensemble optique et la plaque venant recouvrir l'ensemble optique.

L'ensemble optique comporte un guide de lumière 16 et au moins une source lumineuse 18, qui forment ainsi des moyens d'éclairage et/ou de signalisation de l'habitacle, dont l'allumage et/ou l'extinction est commandée par l'utilisateur du véhicule par l'intermédiaire de l'interface tactile.

La source lumineuse est adaptée à émettre des rayons lumineux propagés par le guide de lumière depuis une face d'entrée 20 vers une face de sortie 22. La source lumineuse est agencée en regard de la face d'entrée du guide de lumière, tandis que la face de sortie est tournée vers l'habitacle 24 du véhicule. On comprend que la face de sortie s'étend ainsi en regard de la plaque de recouvrement 6.

On a représenté sur les figures un pavillon 2 de véhicule automobile formant un élément de structure adapté à recevoir une plaque et un ensemble optique selon un mode de réalisation particulier. On comprendra que la plaque et l'ensemble optique peuvent prendre une forme différente sans sortir du contexte de l'invention.

Ici, le guide de lumière prend la forme d'un panneau présentant un plan de symétrie longitudinal et vertical P, tandis que les sources lumineuses sont disposées dans le plan de symétrie du guide de lumière. Le guide de lumière comporte une partie centrale 26 et deux parties latérales 28 s'étendant symétriquement de part et d'autre de la partie centrale. Chaque partie latérale comporte une face inférieure formant la face de sortie 22 du guide de lumière et une face supérieure 30 portant une alternance en gradins de faces de découplage 32 et de faces de réflexion internes 34, les faces de découplage consistant en une surface optique agencée pour permettre aux rayons cheminant à l'intérieur du guide d'être réfléchis vers la face de sortie sous un angle incident tel qu'ils sortent du guide par réfraction via cette face de sortie. La partie centrale du guide de lumière comporte une face supérieure formant la face d'entrée 20 du guide pour les rayons lumineux issus des sources lumineuses primaires, et il présente une face inférieure 36 creusée vers l'intérieur du guide en présentant une forme parabolique, pour former une face de couplage permettant aux rayons issus des sources disposées au foyer de la parabole et rencontrant cette face de couplage d'être orientés à l'intérieur du guide pour s'y propager par réflexions internes totales. A l'extrémité libre de chacune des parties latérales, le guide est prolongé par une partie oblique 38 qui s'étend transversalement à l'opposé du guide et verticalement dans le sens d'un rapprochement vers la source lumineuse. Cette partie oblique est raccordée à son extrémité libre à une ailette 40 qui s'étend sensiblement parallèlement au plan défini par la face de sortie.

La plaque 6 formant l'interface tactile est, notamment sur une majeure partie, sensiblement plane, réalisée en matériau transparent pour laisser passage aux rayons lumineux issus des sources lumineuses primaires et secondaires. La plaque présente un plan de symétrie longitudinal et vertical sensiblement parallèle, voir confondu à celui du guide de lumière lorsque ce dernier est rapporté sur l'interface tactile.

La plaque présente à ses extrémités transversales un bord relevé 42 dont l'extrémité libre présente une forme de gouttière 44, continue sur toute la longueur de la plaque. La gouttière comporte deux montants verticaux et une paroi de fond 46, qui s'étend sensiblement parallèlement au plan de la plaque. On différencie les deux montants verticaux par un montant interne 48 et un montant externe 50, désignés ainsi en fonction de leur proximité avec le centre de la plaque.

Le montant interne sert de support à l'ailette du guide qui repose sur l'interface tactile uniquement à ce niveau. Il n'y a pas de contact entre la face de sortie du guide et l'interface. Un caoutchouc 52 est disposé sur l'extrémité supérieure du montant interne de l'interface tactile pour recevoir le guide.

Les moyens de détection d'une déformation de l'interface tactile sont formés par des moyens capteurs 54 reliés au microprocesseur et distincts de l'élément piézoélectrique 8. Ces moyens capteurs sont formés tel qu'illustré sur la figure 2 par deux capteurs disposés en regard l'un de l'autre de manière à enserrer la paroi de fond de la gouttière déportée solidaire de l'interface tactile. Ces capteurs peuvent être des capteurs capacitifs ou sensitifs, portés par une armature 56 pour être maintenus au contact de la paroi de fond.

Tel qu'illustré, on peut prévoir deux cartes électroniques intermédiaires 58, qui sont chacune disposées d'un côté de l'interface tactile pour faciliter le transfert des informations en provenance des moyens capteurs vers le microprocesseur. Pour relier les capteurs au microprocesseur, via les cartes électroniques, on peut réaliser un trou 60 dans l'armature.

On s'assure, dans le cas de la présence de ces moyens capteurs, que l'élément piézoélectrique ne soit pas situé trop près des capteurs, de manière à éviter que la vibration de la plaque générée par l'élément piézoélectrique pour le retour de force n'entraîne pas des contraintes trop fortes sur les capteurs. Par ailleurs, l'élément piézoélectrique pourra fonctionner comme capteur supplémentaire et apporter une information complémentaire à celles apportées par les moyens capteurs.

On comprend que selon l'invention, on pourra appliquer l'interface tactile et l'élément piézoélectrique dans un élément de structure autre qu'un pavillon. Tel que cela a pu être décrit précédemment, l'application de l'élément piézoélectrique dans un pavillon offre l'opportunité d'avoir une plus grande surface à faire vibrer, de telle sorte que les sons, et la musique potentielle, qui résultent de cette vibration peuvent être plus forts.

La description qui précède explique clairement comment l'invention permet d'atteindre les objectifs qu'elle s'est fixés et notamment de proposer un ensemble structurel de véhicule comportant une plaque que l'on peut faire vibrer à volonté par l'intermédiaire d'un élément piézoélectrique, aussi bien pour produire de la musique que pour produire un retour de force lorsque la plaque associée joue le rôle d'une interface tactile.

Toutefois, l'invention n'est pas limitée au seul dispositif conforme au mode de réalisation explicitement décrit en regard des figures 1 et 2, ni seulement à une application déterminée. A titre d'exemple, comme cela a pu être précisé auparavant, on pourra, sans sortir du cadre de l'invention, modifier le nombre et la disposition des moyens capteurs et des éléments piézoélectriques.

## Revendications

1. Ensemble structurel de véhicule automobile, où une plaque (6) est montée dans un élément de structure (2) dudit véhicule de manière à pouvoir se déformer sous une sollicitation mécanique, ladite plaque portant par ailleurs au moins un élément piézoélectrique (8) piloté par un microprocesseur (10), l'élément piézoélectrique étant apte à recevoir des instructions de commande du microprocesseur pour déformer par vibration ladite plaque, qui comporte un ensemble optique (12), comportant au moins une source lumineuse (18) et un guide de lumière (16), ladite plaque (6) formant une interface tactile de commande de l'allumage dudit ensemble optique et présente, notamment sur une majeure partie, une forme sensiblement plane, **caractérisé en ce que** le guide de lumière (16) présente à sa périphérie des ailettes de fixation (40) et **en ce que** la plaque (6) présentant à au moins l'une de ses extrémités libres un bord relevé (42) dont l'extrémité libre est déportée de la plaque et adaptée à loger des moyens capteurs (54) pour la détection de la vibration de la plaque.

2. Ensemble structurel selon la revendication 1, **caractérisé en ce que** le microprocesseur (10) est en outre adapté à recevoir des informations quantitatives et/ou qualitatives sur la déformation de ladite plaque par l'intermédiaire de moyens de détection (54) de cette déformation qui sont rapportés sur ladite plaque.

3. Ensemble structurel selon la revendication 2, **caractérisé en ce qu'**il comporte au moins trois moyens de détection (54).

4. Ensemble structurel selon l'une des revendications 2 ou 3, **caractérisé en ce que** lesdits moyens de détection (54) sont formés par des moyens capteurs (54) distincts de l'élément piézoélectrique (8).

5. Ensemble structurel selon la revendication 4, **caractérisé en ce que** lesdits moyens capteurs (54) sont des capteurs capacitifs ou sensitifs.

6. Ensemble structurel selon l'une des revendications 2 ou 3, **caractérisé en ce que** les moyens de détection sont formés par l'élément piézoélectrique (8).

7. Ensemble structurel selon l'une des revendications précédentes, **caractérisé en ce que** l'ensemble optique (12) est disposé contre ladite plaque (6).

8. Ensemble structurel selon l'une des revendications précédentes, **caractérisé en ce que** l'extrémité libre déportée prend la forme d'une gouttière (44) comportant deux montants verticaux (48, 50) et une paroi de fond (46), qui s'étend sensiblement parallèlement au plan de la plaque.

9. Ensemble structurel selon la revendication 8, **caractérisé en ce que** le montant vertical interne (48), le plus proche du centre de l'interface, sert de support à une ailette (40) du guide qui repose sur l'interface tactile uniquement à ce niveau.

10. Ensemble structurel selon l'une des revendications 8 à 9, **caractérisé en ce que** chaque moyen capteur (54) comporte deux capteurs disposés au contact de part et d'autre de la paroi de fond de la gouttière (44), portés par une armature (56) entourant partiellement ladite gouttière.

11. Ensemble structurel selon l'une des revendications précédentes, **caractérisé en ce qu'**il est agencé en dispositif d'éclairage de l'habitacle du véhicule automobile.

12. Véhicule automobile comportant un ensemble structurel selon l'une des revendications 1 à 11, dans lequel la plaque (6) affleure avec des bords (14) de l'élément de structure (2), lesdits bords délimitant une ouverture (4) réalisée dans ledit élément de structure pour recevoir ladite plaque et l'ensemble optique (12).

13. Véhicule automobile selon la revendication 12, **caractérisé en ce que** l'élément de structure est un pavillon (2).

## Patentansprüche

1. Struktureinheit eines Kraftfahrzeugs, wobei eine Platte (6) in einem Strukturelement (2) des Fahrzeugs derart angebracht ist, dass sie sich unter einer mechanischen Beanspruchung verformen kann, wobei die Platte außerdem wenigstens ein piezoelektrisches Element (8) trägt, das von einem Mikroprozessor (10) gesteuert wird, wobei das piezoelektrische Element in der Lage ist, Steueranweisungen des Mikroprozessors zu empfangen, um durch Vibration die Platte zu verformen, welche eine optische Einheit (12) trägt, die wenigstens eine Lichtquelle (18) und einen Lichtleiter (16) umfasst, wobei die Platte (6) eine Berührungsschnittstelle zur Steuerung der Beleuchtung der optischen Einheit bildet und, insbesondere auf einem größeren Teil, eine im Wesentlichen ebene Form aufweist,
**dadurch gekennzeichnet, dass** der Lichtleiter (16) an seiner Peripherie Befestigungsflügel (40) aufweist, und dadurch, dass die Platte (6) an wenigstens einem ihrer freien Enden einen hochstehenden Rand (42) aufweist, dessen freies Ende zu der Platte versetzt ist und dafür ausgelegt ist, Sensormittel (54) für die Detektion der Vibration der Platte aufzunehmen.

2. Struktureinheit nach Anspruch 1, **dadurch gekennzeichnet, dass** der Mikroprozessor (10) außerdem dafür ausgelegt ist, quantitative und/oder qualitative Informationen betreffs der Verformung der Platte über Mittel zur Detektion (54) dieser Verformung zu empfangen, welche auf der Platte angebracht sind.

3. Struktureinheit nach Anspruch 2, **dadurch gekennzeichnet, dass** sie wenigstens drei Detektionsmittel (54) umfasst.

4. Struktureinheit nach einem der Ansprüche 2 oder 3, **dadurch gekennzeichnet, dass** die Detektionsmittel (54) von Sensormitteln (54) gebildet werden, die von dem piezoelektrischen Element (8) verschieden sind.

5. Struktureinheit nach Anspruch 4, **dadurch gekennzeichnet, dass** die Sensormittel (54) kapazitive Sensoren oder Berührungssensoren sind.

6. Struktureinheit nach einem der Ansprüche 2 oder 3, **dadurch gekennzeichnet, dass** die Detektionsmittel von dem piezoelektrischen Element (8) gebildet werden.

7. Struktureinheit nach einem der vorhergehenden Ansprüche, **dadurch gekennzeichnet, dass** die optische Einheit (12) an der Platte (6) anliegend angeordnet ist.

8. Struktureinheit nach einem der vorhergehenden Ansprüche, **dadurch gekennzeichnet, dass** das versetzte freie Ende die Form einer Rinne (44) annimmt, die zwei vertikale Schenkel (48, 50) und eine Bodenwand (46), welche sich im Wesentlichen parallel zur Ebene der Platte erstreckt, umfasst.

9. Struktureinheit nach Anspruch 8, **dadurch gekennzeichnet, dass** der innere vertikale Schenkel (48), der dem Mittelpunkt der Schnittstelle am nächsten ist, als Stütze für einen Flügel (40) des Lichtleiters dient, welcher ausschließlich auf dieser Höhe auf der Berührungsschnittstelle ruht.

10. Struktureinheit nach einem der Ansprüche 8 bis 9, **dadurch gekennzeichnet, dass** jedes Sensormittel (54) zwei Sensoren umfasst, welche beiderseits der Bodenwand der Rinne (44) in Kontakt mit dieser angeordnet sind und von einem Gestell (56) getragen werden, das die Rinne teilweise umgibt.

11. Struktureinheit nach einem der vorhergehenden Ansprüche, **dadurch gekennzeichnet, dass** sie als Beleuchtungsvorrichtung des Innenraums des Kraftfahrzeugs ausgebildet ist.

12. Kraftfahrzeug, welches eine Struktureinheit nach einem der Ansprüche 1 bis 11 umfasst, wobei die Platte (6) mit Rändern (14) des Strukturelements (2) bündig liegt, wobei die Ränder eine in dem Strukturelement ausgebildete Öffnung (4) zur Aufnahme der Platte und der optischen Einheit (12) begrenzen.

13. Kraftfahrzeug nach Anspruch 12, **dadurch gekennzeichnet, dass** das Strukturelement ein Dachhimmel (2) ist.

## Claims

1. Structural assembly of a motor vehicle, where a plate (6) is mounted in a structural element (2) of the said vehicle so as to be able to deform under a mechanical stress, the said plate bearing, moreover, at least one piezoelectric element (8) controlled by a microprocessor (10), the piezoelectric element being able to receive control instructions from the microprocessor to deform the said plate by vibration, which structural assembly comprises an optical assembly (12) comprising at least one light source (18) and a light guide (16), the said plate (6) forming a tactile interface for controlling the lighting of the said optical assembly and having a substantially planar shape, in particular over a major portion, **characterized in that** the light guide (16) has fastening fins (40) at its periphery, and **in that** the plate (6) has at at least one of its free ends a raised edge (42) of which the free end is offset from the plate and adapted to house sensor means (54) for detecting the vibration of the plate.

2. Structural assembly according to Claim 1, **characterized in that** the microprocessor (10) is additionally adapted to receive quantitative and/or qualitative information on the deformation of the said plate via means (54) for detecting this deformation that are attached to the said plate.

3. Structural assembly according to Claim 2, **characterized in that** it comprises at least three detection means (54).

4. Structural assembly according to either of Claims 2 and 3, **characterized in that** the said detection means (54) are formed by sensor means (54) which are distinct from the piezoelectric element (8).

5. Structural assembly according to Claim 4, **characterized in that** the said sensor means (54) are capacitive or sensitive sensors.

6. Structural assembly according to either of Claims 2 and 3, **characterized in that** the detection means are formed by the piezoelectric element (8).

7. Structural assembly according to one of the preceding claims, **characterized in that** the optical assembly (12) is arranged against the said plate (6).

8. Structural assembly according to one of the preceding claims, **characterized in that** the offset free end takes the form of a channel (44) comprising two vertical uprights (48, 50) and a bottom wall (46) which extends substantially parallel to the plane of the plate.

9. Structural assembly according to Claim 8, **characterized in that** the inner vertical upright (48), the closer one to the centre of the interface, serves as a support for a fin (40) of the guide which rests on the tactile interface only at this level.

10. Structural assembly according to either of Claims 8 and 9, **characterized in that** each sensor means (54) comprises two sensors which are arranged in contact on either side of the bottom wall of the channel (44) and are borne by a reinforcement (56) partially surrounding the said channel.

11. Structural assembly according to one of the preceding claims, **characterized in that** it is arranged in the device for lighting the passenger compartment of the motor vehicle.

12. Motor vehicle comprising a structural assembly according to one of Claims 1 to 11, in which the plate (6) is flush with edges (14) of the structural element (2), the said edges delimiting an opening (4) formed in the said structural element to receive the said plate and the optical assembly (12).

13. Motor vehicle according to Claim 12, **characterized in that** the structural element is a roof (2).
